Europäisches Patentamt

(19) European Patent Office

Office européen des brevets

(11) Numéro de publication: **0 089 705**
**B1**

(12) **FASCICULE DE BREVET EUROPEEN**

(45) Date de publication du fascicule du brevet:
**10.12.86**

(51) Int. Cl.⁴: **B 29 D 11/00, H 05 B 6/30**

(21) Numéro de dépôt: **83200291.9**

(22) Date de dépôt: **28.02.83**

(54) **Procédé perfectionné pour la fabrication, par moulage, de lentilles de contact et dispositif de mise en oeuvre.**

(30) Priorité: **17.03.82 FR 8204663**

(43) Date de publication de la demande:
**28.09.83 Bulletin 83/39**

(45) Mention de la délivrance du brevet:
**10.12.86 Bulletin 86/50**

(84) Etats contractants désignés:
**AT BE CH DE FR GB IT LI LU NL SE**

(56) Documents cités:
**EP - A - 0 035 310**
**FR - A - 2 270 082**
**FR - A - 2 371 226**
**LU - A - 67 195**
**US - A - 4 144 434**

(73) Titulaire: **ALCON PHARMACEUTICALS LIMITED,
CH-6330 Cham (CH)**

(72) Inventeur: **Feurer, Bernard, Les Mottes Montlaur,
F-31450 Montgiscard (FR)**
Inventeur: **Parnot, Gilles, 20 Chemin le Tintoret
Appt. 469, F-31100 Toulouse (FR)**

(74) Mandataire: **Barre, Philippe, Cabinet Barre, Gatti,
Laforgue 95, rue des Amidonniers, F-31069 Toulouse
Cedex (FR)**

## Description

L'invention concerne un procédé perfectionné de fabrication, par moulage, d'une lentille de contact constituant un produit fini ayant les qualités optiques requises pour être mise en place au contact d'un œil et assurer les corrections recherchées. Elle s'étend à un nouveau dispositif pour la mise en œuvre de ce procédé.

On a décrit dans la demande de brevet française no 8 004 751 publiée le 04 septembre 1981 sous le no FR-A-2 477 059 un procédé de fabrication de lentilles, dans lequel les lentilles sont réalisées par moulage dans un moule étanche fermé, dans des conditions propres à leur conférer directement leur forme définitive avec les qualités optiques appropriées, sans opération supplémentaire d'usinage.

Par ailleurs, on connaît, dans d'autres domaines techniques, des dispositifs d'application d'ondes hyperfréquences, en particulier pour chauffer des barres, fils ou fibres en verre, tel que dispositif décrit dans le brevet US-A-4 144 434. Toutefois, ces dispositifs visent des techniques sans rapport avec celui du domaine concerné et ne sont pas directement adaptables à celui-ci.

La présente invention se propose d'indiquer des améliorations du procédé décrit dans la demande française FR-A-2 477 059 en vue d'accroître la qualité des lentilles obtenues.

Un autre objectif de l'invention est de réduire les temps de fabrication requis et la consommation énergétique nécessaire.

Un autre objectif est d'autoriser la fabrication de lentilles très minces, tout en conférant à celles-ci les qualités optiques appropriées.

A cet effet, le procédé visé par la présente invention consiste essentiellement:

– à réaliser des moules étanches fermés, reproduisant en creux la forme des lentilles à obtenir et constitués en un matériau transparent ou peu absorbant à l'égard des ondes électromagnétiques hyperfréquences, lesdits moules étant réalisés de façon à posséder une inertie thermique très supérieure à celle de la dose de composition de base nécessaire pour réaliser une lentille,

– à élaborer une composition de base à partir d'un ou de monomères à doubles liaisons polymérisables, ayant un caractère absorbant à l'égard des ondes hyperfréquences,

– et à assurer la polymérisation de la composition à l'intérieur des moules fermés, par irradiation au moyen d'ondes hyperfréquences, l'opération de polymérisation étant réalisée en disposant une pluralité de moules contenant chacun une dose de composition de base, à l'intérieur d'au moins une enceinte fermée. Selon la présente invention, l'enceinte métallique est à symétrie de révolution, constituant une cavité résonnante à mode unique pour la fréquence des ondes hyperfréquences utilisées, lesdits moules étant superposés selon une ou plusieurs colonnes et répartis de sorte que les doses de composition de base contenues dans lesdits moules fassent office de charge adaptée à l'intérieur de ladite cavité résonnante. Les moules sont, soit disposés selon une colonne unique disposée le long de l'axe de l'enceinte, celle-ci étant alors excitée par un iris symétrique par rapport au plan transversal médian de l'enceinte, soit positionnés, d'une part, selon quatre colonnes, dites centrales, disposées au voisinage immédiat d'une antenne rayonnante s'étendant le long de l'axe de l'enceinte, d'autre part, selon quatre autres colonnes, dites périphériques, disposées à la périphérie immédiate des colonnes centrales, chaque colonne périphérique étant disposée dans l'espace séparant le pourtour extérieur de deux colonnes centrales voisines.

Les moules utilisés sont en particulier des moules en deux parties s'emboîtant étanchement l'une dans l'autre.

De préférence, on utilise une enceinte constituant une cavité résonnante selon le mode TM 010 («Transverse Magnetic Mode»); cette enceinte est excitée par des moyens de rayonnement hyperfréquence, propres à favoriser ce mode de résonance, le champ électromagnétique créé dans la cavité se composant d'un champ électrique dont les lignes de force sont sensiblement des droites parallèles à l'axe de révolution de l'enceinte, et d'un champ magnétique dont les lignes de force sont sensiblement des cercles centrés sur cet axe.

Les expérimentations ont montré qu'un tel procédé assurait un traitement identique de toutes les lentilles contenues dans la cavité, sans variation brusque ou périodique, et permettait d'assurer un transfert d'énergie dans des conditions optimales pour obtenir des lentilles de qualités optiques remarquables, sans risque de déformation ou de décollement de la matière en cours de polymérisation.

Selon une autre caractéristique de la présente invention, l'on assure de préférence une ventilation de l'enceinte en vue d'éviter l'apparition d'un gradient de température dans celle-ci. Pour la majorité des matières polymérisables utilisées, l'enceinte sera alimentée en ondes hyperfréquences de sorte que la densité de puissance moyenne à l'intérieur de celle-ci soit approximativement comprise entre $10^{-2}$ et $50.10^{-2}$ watt/cm$^3$.

Dans ces conditions, la température au niveau des moules est approximativement homogène et inférieure à approximativement 40 °C.

Les compositions de base utilisées pour réaliser les lentilles sont en particulier constituées par un monomère ou un mélange de monomères ayant une molécule de volume élevé, du groupe suivant: hydroxy-éthyl méthacrylate, hydroxypropyl méthacrylate, hydroxy-éthyl acrylate, éthylène glycol diméthacrylate, N vinyl pyrrolidone, méthyl méthacrylate, acide méthacrylique.

D'après les observations expérimentales, les résultats obtenus sont améliorés dans la majorité des cas en mélangeant à ladite composition de base un initiateur constitué en particulier par de l'azobis iso butyro nitrile ou un hydro-péroxyde ou un péroxyde, en proportion pondérale approximativement comprise entre 0,04% et 0,15%.

L'invention s'étend à un dispositif de fabrication de lentilles de contact, permettant la mise en œu-

vre du procédé décrit; ce dispositif comprend essentiellement des moyens de générations d'ondes hyperfréquences de fréquence prédéterminée, une enceinte fermée et un guide d'ondes, caractérisé en ce que l'enceinte est cylindrique métallique, adaptée pour former une cavité résonnante à mode unique pour la fréquence desdites ondes, des moyens de rayonnement couplant les moyens de génération d'ondes et ladite cavité résonnante et constitués par une antenne métallique axiale ou par un iris médian pratiqué dans la paroi de l'enceinte, et des moyens de positionnement d'une pluralité de moules dans ladite cavité, adaptés pour permettre de disposer lesdits moules dans une zone de champ électromagnétique sensiblement homogène de ladite cavité.

L'enceinte dudit dispositif peut en particulier posséder un diamètre interne D tel que:

$$D = \frac{2{,}29 \cdot 10^4}{f} \mp 1\% \text{ dans le cas du mode TM 010}$$

$$D = \frac{3{,}65 \cdot 10^4}{f} \mp 1\% \text{ dans le cas du mode TM 110}$$

où D est exprimé en millimètres et où f est la fréquence des ondes exprimées en mégahertz. (La fréquence utilisée étant généralement une fréquence industrielle: 2450 Mhz, 915 Mhz, 434 Mhz...).

Par ailleurs, le dispositif de l'invention est avantageusement équipé de moyens de ventilation, moyens aptes à assurer un écoulement d'air externe autour de l'enceinte, ou encore organe de soufflage d'air à l'intérieur de celle-ci, combiné à une bouche de sortie d'air.

Le dispositif de l'invention peut comprendre une seule enceinte ou encore plusieurs enceintes couplées de façon à être soumises à une répartition énergétique sensiblement identique.

L'invention ayant été exposée dans sa forme générale, d'autres caractéristiques, buts et avantages de celle-ci se dégageront de la description qui suit, en référence aux dessins annexés, fournis à titre non limitatif pour illustrer l'invention; sur ces dessins:

— la figure 1 est une vue schématique d'un dispositif de fabrication de lentilles conforme à la présente invention,

— les figures 2 et 3 sont des vues respectivement en coupe transversale AA et en coupe axiale BB d'une enceinte équipant ledit dispositif,

— Les figures 4 et 5 sont des vues en perspective, représentant d'autres modes de réalisation des moyens de positionnement des moules dans cette enceinte,

— Les figures 6 et 7 schématisent deux modes de réalisation de moyens de ventilation associés à ladite enceinte,

— les figures 8 et 9 schématisent partiellement d'autres modes de réalisation de dispositif, équipés de plusieurs enceintes,

— la figure 10 schématise un autre mode de réalisation du dispositif,

— les figures 11 et 12 sont des coupes axiales de deux variantes du dispositif schématisé à la figure 10.

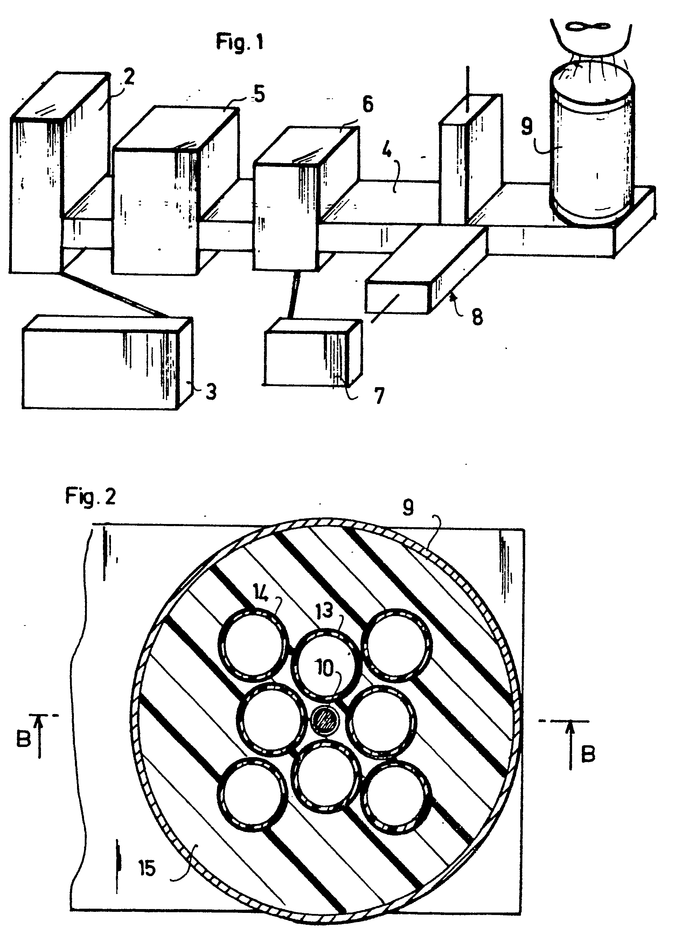

Le dispositif représenté à titre d'exemple aux figures 1, 2 et 3 est destiné à la fabrication par moulage de lentilles de contact hydrophiles (ou lentilles souples) ayant, directement après moulage, toutes les caractéristiques requises (géométriques, mécaniques et optiques) sans qu'il soit besoin de leur faire subir des opérations d'usinage ou autres finitions.

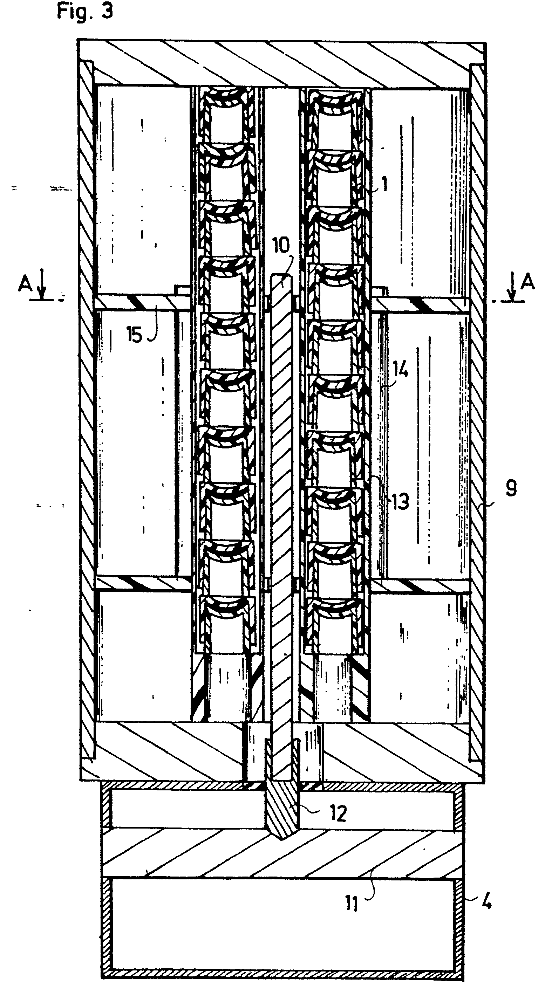

On utilise à cet effect des moules (que l'on aperçoit, en positions superposées, en 1 à la figure 3), qui sont chacun constitués de deux parties se refermant étanchément l'une sur l'autre par emboîtement, pour délimiter un volume fermé de moulage dans lequel est disposée une dose de composition de base appelée à former une lentille. Chaque partie de moule est réalisée en un matériau transparent à l'égard des ondes hyperfréquences, en particulier en polypropylène pur non chargé, polyéthylène et polyméthylpentène, et présente un volume et un poids très supérieurs à celui de la dose de composition de base contenue dans le moule.

Le dispositif visé par l'invention permet de réaliser la polymérisation d'une pluralité de lentilles dans des conditions appropriées pour obtenir de parfaites qualités géométriques et optiques de celles-ci. Il comprend un magnétron 2 associé à un ensemble d'alimentation électrique 3, qui génère des ondes hyperfréquences de fréquence déterminée dans un guide d'ondes 4 de forme rectangulaire appropriée pour permettre la propagation du mode fondamental à la fréquence choisie.

Le long du guide d'ondes 4 sont interposés un circulateur 5 permettant de dériver l'onde réfléchie vers une charge annexe afin de protéger le magnétron en cas d'augmentation notable du rapport d'onde stationnaire, un bicoupleur 6 associé à un milliwattmètre 7 pour contrôler la valeur de ce rapport d'onde stationnaire et un adaptateur E/H réglable 8, permettant de faire varier ce rapport afin de l'ajuster à une valeur proche de 1.

A cet effet, cet adaptateur comprend deux courts circuits mobiles, formés par des pistons métalliques que l'on peut déplacer à l'intérieur de deux portions latérales de guides d'ondes (l'une parallèle au champ électrique, l'autre au champ magnétique).

A l'extrémité du guide 4 est couplée une enceinte métallique de forme cylindrique 9, constituant une cavité résonnante selon le mode TM 010.

Cette enceinte 9 que l'on aperçoit en coupe à la figure 3 est en laiton et est obturée à chaque extrémité par un disque en laiton, le disque supérieur étant amovible. Pour une longueur d'ondes égale à 2450 Megahertz qui est utilisée dans les exemples qui suivent, son diamètre intérieur D est prévu égal à 93,7 mm.

L'enceinte 9 est couplée au guide 4 sur lequel elle est assujettie, par l'entremise d'une antenne métallique axiale 10 qui s'étend sur une partie de sa hauteur (environ entre les 2/3 et les 3/4 de cette hauteur). Cette antenne passe au travers d'une lumière pratiquée dans le disque inférieur de l'enceinte pour pénétrer dans le guide d'onde 4 par une autre lumière pratiquée dans celui-ci. A son extrémité l'antenne 10 est assujettie à une barre transversale de couplage 11 («cross-bar») qui est logée dans le guide 4 entre les parois latérales de celui-ci.

En l'exemple, l'antenne 10 est portée par un pion métallique 12 soudé sur la barre transversale 11 et guidé par une rondelle en polytétrafluoro-éthylène au niveau de la lumière du guide; l'antenne 10 est vissée par son extrémité dans un trou borgne taraudé du pion 12.

Les moules 1 sont disposés comme le montrent les figures 2 et 3, autour de l'antenne 10, en positions superposées sur huit colonnes. Ils sont guidés dans cette position par des guides tubulaires tels que 13 ou 14, réalisés en un matériau diélectrique transparent ou peu absorbant à l'égard des ondes hyperfréquences, en particulier en polytétrafluoroéthylène ou en silicone. A leur base, ces guides possèdent une surépaisseur interne pour former une butée pour les moules inférieurs. Le diamètre interne de ces guides est légèrement supérieur au diamètre externe des moules afin de pouvoir contenir ceux-ci.

Les guides tubulaires 13 et 14 sont positionnés dans l'enceinte 9, parallèlement à l'axe de celle-ci, par deux disques de maintien tels que 15 qui sont collés sur chant sur la paroi circulaire de l'enceinte; ces disques sont réalisés dans le même matériau que les guides 13 et 14 et comportent huit trous pour le passage de ces derniers. Les guides 13 et 14 sont ainsi amovibles et peuvent être extraits pour la mise en place des moules à l'intérieur de ceux-ci et introduits ensuite dans l'enceinte en positions appropriées toujours identiques grâce aux disques de maintien 15.

Comme le montrent les figures 2 et 3, quatre guides tubulaires centraux tels que 13 sont disposés au voisinage immédiat de l'antenne 10 pour s'étendre à peu près sur la hauteur de l'enceinte, cependant que quatre guides périphériques tels que 14 sont disposés à la périphérie immédiate des guides centraux 13 pour s'étendre sur une fraction de la hauteur de l'enceinte (au niveau de sa zone médiane).

Les moules contenus dans ces guides sont ainsi disposés en colonnes superposées: quatre colonnes plus hautes, situées au voisinage immédiat de l'antenne et diamétralement opposées deux à deux, et quatre autres plus courtes disposées dans les espaces séparant le pourtour extérieur des premières, comme le représente la figure 2. Le volume central utile occupé par ces colonnes de moules représente une fraction du volume total de l'enceinte.

Les expérimentations ont montré que cette fraction pouvait être de l'ordre du quart du volume total: le champ électrique dont les lignes de force sont des droites parallèles à l'antenne, et le champ magnétique dont les lignes de force sont des cercles concentriques à celles-ci, sont sensiblement homogènes dans ce volume, à l'exception des parties hautes et basses situées au-dessus et au-dessous des guides 14 (ce qui explique que ceux-ci sont prévus plus courts pour ne pas s'étendre dans ces parties).

Par ailleurs, on a pu constater dans certaines applications qu'il était utile de prévoir des charges diélectriques auxiliaires à la place de certains moules. Ces charges réalisées en un matériau absorbant à l'égard des ondes hyperfréquences peuvent être constituées par des moules contenant des doses de composition de base, mais les lentilles obtenues ne seront pas prises en compte ensuite, en raison de leur qualité inférieure par rapport aux autres. Ces charges sont utiles pour accroître l'homogénéité du champ électromagnétique au niveau des moules utiles, tout en facilitant l'adaptation de l'ensemble de la charge contenue dans la cavité afin d'obtenir un rendement énergétique élevé (pouvant être de l'ordre de 90%). Les essais ont montré que ces charges devaient généralement être situées à la base des guides 13 (guides de grande hauteur).

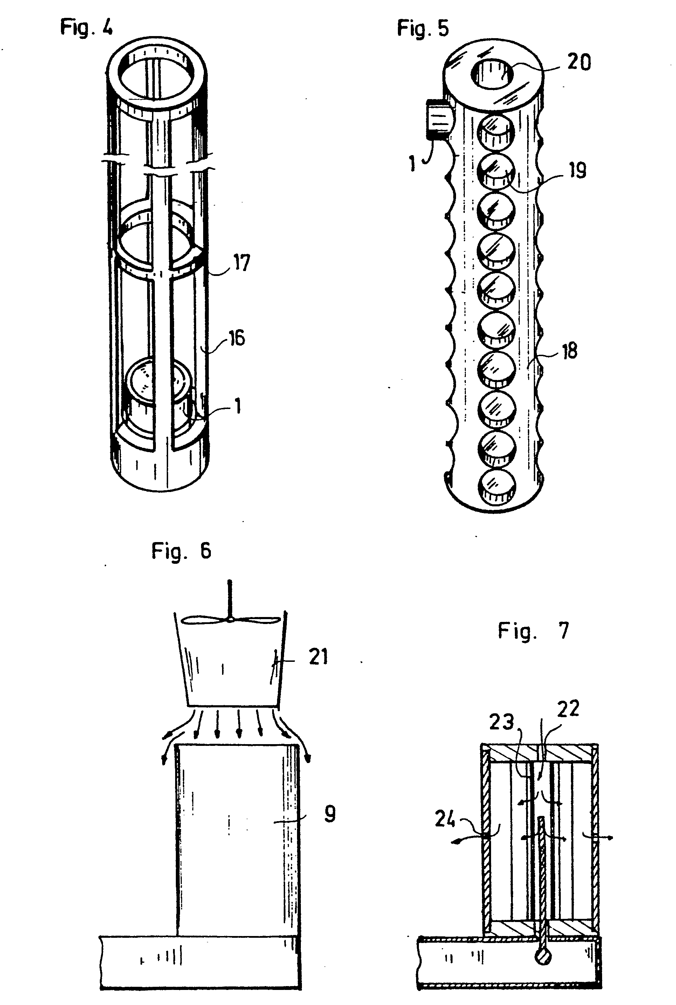

La figure 4 présente un autre mode de réalisation d'un guide tubulaire; dans ce mode de réalisation, le guide est ajouré et le guidage des moules est assuré par quatre montants 16, entretoisés par des parties circulaires 17. Il est à noter que les moules peuvent, le cas échéant, être prévus emboîtables les uns sur les autres, de façon à permettre une simplification ou même une suppression complète des guides.

La figure 5 présente (à échelle plus réduite) une autre réalisation des moyens de positionnement des moules. Les huit guides précités sont remplacés par une seule colonne 18 (réalisée en matériau analogue transparent à l'égard des ondes hyperfréquences), qui possède des trous borgnes transversaux tels que 19, permettant de loger et bloquer les moules. Ceux-ci sont alors superposés chacun en position transversale (la figure 5 représente un des moules mis en place). La colonne 18 est disposée comme précédemment autour de l'antenne qui est logée dans une lumière axiale 20 de ladite colonne.

Par ailleurs, à l'enceinte 9 du dispositif sont de préférence associés des moyens de ventilation permettant de refroidir la partie supérieure de ladite enceinte, en vue d'éviter l'apparition d'un gradient de température dû à un échauffement et à une convection à l'intérieur de l'enceinte.

Cette ventilation peut être assurée par un ventilateur externe 21 (figure 6) disposé axialement au-dessus de l'enceinte 9. Cette disposition suffit à limiter convenablement le gradient de température dans le cas où la charge contenue dans celle-ci est relativement faible.

Dans le cas contraire, on prévoit de préférence un organe de soufflage apte à insuffler un débit d'air à l'intérieur de l'enceinte (figure 7). Ce débit est introduit par une lumière axiale 22 du disque supérieur, est guidé par une colonne centrale 23 (en matériau transparent à l'égard des ondes hyperfréquences) qui entoure l'antenne d'un bout à l'autre de l'enceinte, et traversé des trous pratiqués dans la partie supérieure de la colonne 23; des bouches de sortie 24 sont prévues dans la paroi cylindrique de l'enceinte pour l'évacuation de l'air.

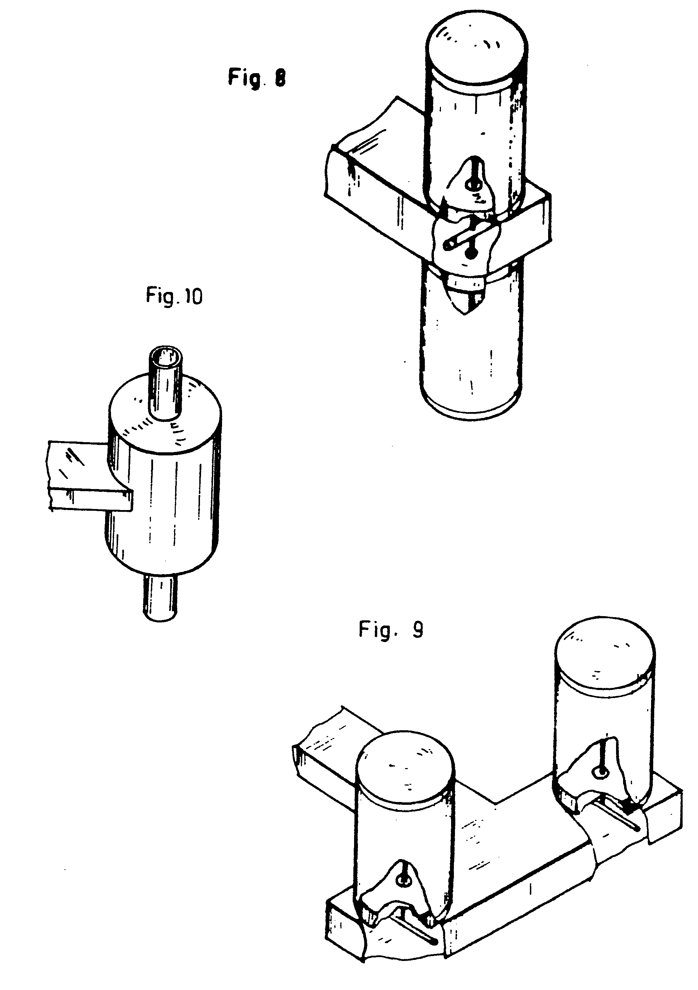

Le dispositif peut être équipé d'une seule enceinte 9 comme décrit précédemment ou de plusieurs enceintes identiques comme le représentent les figures 8 et 9.

Le dispositif de la figure 8 est équipé de deux enceintes couplées par la même barre transversale (cross-bar) en bout du guide d'ondes, ces enceintes étant disposées symétriquement l'une par rapport à l'autre.

Le dispositif de la figure 9 est équipé de deux enceintes, couplées par deux barres transversales situées dans un tronçon de guide d'ondes prolongeant transversalement le guide principal. Les deux barres transversales sont écartées d'une distance égale à la longueur d'onde guidée. Il est possible de mettre en place quatre enceintes en combinant le couplage de la figure 8 à celui de la figure 9.

Le cas échéant, d'autres couplages peuvent être prévus pour disposer un nombre d'enceintes plus élevé et les soumettre à une même répartition énergétique.

Par ailleurs, les figures 10, 11 et 12 schématisent un autre mode de réalisation, dans lequel l'enceinte est couplée à l'extrémité du guide d'onde 4 par un iris rayonnant 25. Cet iris est symétrique par rapport au plan transversal médian de l'enceinte et est formé par une fente réalisée dans la paroi cylindrique de celle-ci.

Pour une enceinte ayant les dimensions déjà indiquées, la hauteur de cet iris est de 34 mm et sa largeur (développée) de 50 à 60 mm, en fonction de la charge et du mode d'utilisation.

De plus l'enceinte est ajourée au centre de ses parois cylindriques, supérieure et inférieure, de deux lumières bordées de manchons de guidage 26 et 27.

Les moules du type déjà évoqué sont contenus dans un guide tubulaire central 28 en polytétrafluoroéthylène qui traverse l'enceinte le long de son axe.

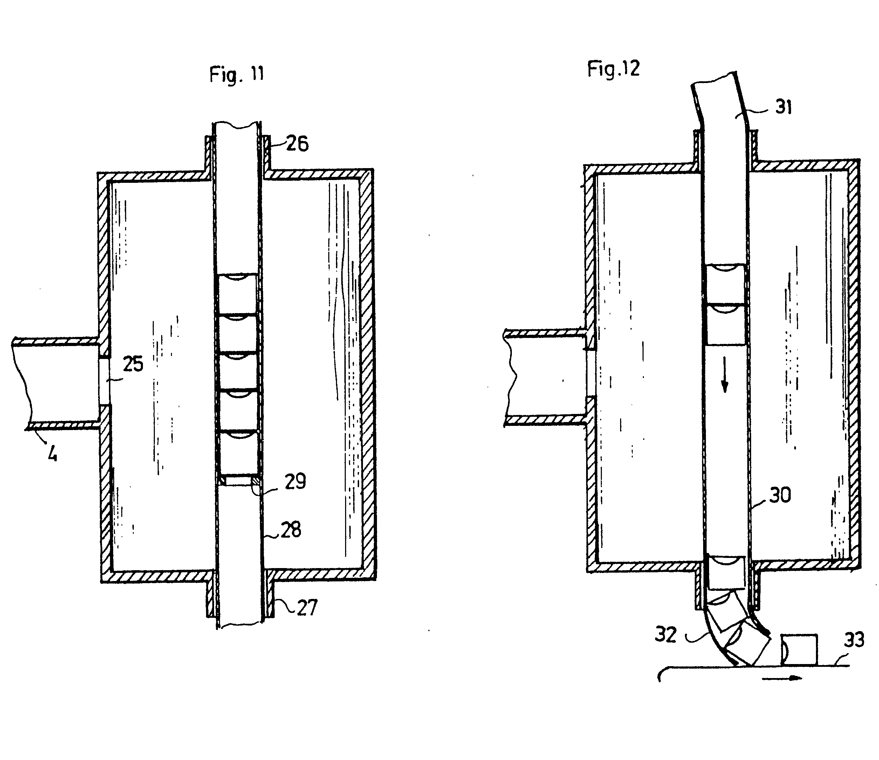

Dans le cas de la figure 11, les moules sont immobiles pendant le traitement et bloqués dans le guide 28 au centre de l'enceinte par une bague 28 collée dans ladite colonne. Après le traitement, le guide tubulaire 28 est retiré de l'enceinte pour remplacer les moules.

Dans le cas de la figure 11, le guide tubulaire 30 se prolonge en partie haute par un chargeur 31 constitué par un tube contenant des moules et comporte en partie basse un conduit 32 d'évacuation, qui dépose les moules sur un tapis roulant 33. Les moules traversent ainsi l'enceinte et le traitement s'effectue en continu. La vitesse de défilement du tapis 33 est adaptée de façon à laisser les moules le temps approprié dans le volume utile central de l'enceinte.

Les exemples 1, 2 et 3 fournis ci-après ont été mis en œuvre au moyen d'un dispositif à une enceinte du type de celui représenté aux figures 1, 2 et 3, avec une ventilation externe du type de celle de la figure 6. Les exemples 4 et 5 ont été mis en œuvre respectivement dans un dispositif tel que représenté à la figure 11 et dans un dispositif tel que représenté à la figure 12. Dans tous les cas, la longueur d'onde utilisée était de 2450 mégahertz et la hauteur de l'enceinte était de 294 mm.

Exemple 1
Composition de base disposée dans chaque moule fermé:

| | |
|---|---|
| Hydroxy éthyl méthacrylate (Hema) | 72,14% (en poids) |
| Hydroxy propyl méthacrylate (Hpma) | 23,73% |
| Hydroxy éthy acrylate (Hea) | 2,00% |
| Ethylène glycol diméthacrylate (Egdma) | 0,05% |
| Polyvinyl pyrrolidone (PVP) | 2,00% |
| Azobis iso butyro nitrile (AIBN) | 0,08% |

Poids de la dose à l'intérieur de chaque moule: 0,05 g
Nombre de moules utiles disposés dans l'enceinte: 36
Poids propre de chaque moule: 1,30 g
Nombre de charges auxiliaires formées par des moules contenant des doses perdues: 12
Disposition de ces charges auxiliaires: en partie basse des guides 13.

Après mise en fonctionnement du ventilateur et du magnétron, l'adaptateur 8 est réglé de façon que l'énergie réfléchie dans le guide 4 (mesurée par le milliwattmètre 7) soit minimum. On obtient alors les conditions de traitement suivantes:

$$\frac{\text{puissance absorbée dans l'enceinte}}{\text{puissance émise par le magnétron}} : 0,60$$

Densité de puissance moyenne de l'enceinte: 0,06 watt/cm³
Débit d'air de ventilation: 100 l/h
Température ambiante: 20°C
température sur la face interne de la paroi de l'enceinte: 30°C
durée du traitement: 30 mn.

Au terme de ce traitement, on obtient des lentilles de contact hydrophiles, polymérisées de façon uniforme, ne présentant aucun défaut géométrique ou optique et pourvues de bords minces parfaitement formés. Chaque lentille obtenue est apte à absorber environ 38% d'eau (en poids par rapport au poids final de la lentille hydratée).

Exemple 2
Cet exemple vise la réalisation de lentilles très minces ayant des épaisseurs de l'ordre de 5/100 mm au niveau de l'axe optique.
Composition de base disposée dans chaque moule fermé:

| | |
|---|---|
| N vinyl pyrrolidone | 74,58% |
| méthyl méthacrylate | 24,84% |
| éthylène glycol diméthacrylate | 0,50% |
| azobis iso butyro nitrile | 0,08% |

Poids de la dose à l'intérieur de chaque moule: 0,040 g

Nombre de moules utiles disposés dans l'enceinte: 36

Poids propre de chaque moule: 0,85 g

Nombre de charges auxiliaires formées par des moules contenant des doses perdues: 8

Disposition de ces charges auxiliaires: en partie basse des guides 13.

On constate que le réglage précédent de l'adaptateur 8 doit être légèrement modifié en raison de la modification de la composition disposée dans les moules.

$$\frac{\text{puissance absorbée dans l'enceinte}}{\text{puissance émise par le magnétron}} : 0,50$$

Densité de puissance moyenne dans l'enceinte: 0,025 watt/cm$^3$

Débit d'air de ventilation: 100 l/h

Température ambiante: 20 °C

Température sur la face interne de la paroi de l'enceinte: 24 °C

Durée de traitement: 90 mn.

Malgré leur très faible épaisseur, on ne constate aucune déformation des lentilles et, comme précédemment, celles-ci ont une qualité les rendant aptes à être utilisées directement (taux d'hydratation: 70%).

Exemple 3

Composition de base:

| 2 hydroxy éthyl méthacrylate | 99,91% |
| Azobis iso butyro nitrile | 0,09% |

Poids de la dose à l'intérieur de chaque moule: 0,04 g

Nombre de moules utiles disposés dans l'enceinte: 56

Poids propre de chaque moule: 0,85 g

Nombre de charges auxiliaires formées par des moules contenant des doses perdues: 16

Disposition de ces charges auxiliaires: en partie basse des guides 13

$$\frac{\text{puissance absorbée dans l'enceinte}}{\text{puissance émise par le magnétron}} : 0,60$$

Densité de puissance moyenne dans l'enceinte: 0,045 watt/cm$^3$

Débit d'air de ventilation: 100 l/h

Température ambiante: 20 °C

Température sur la face interne de la paroi de l'enceinte: 25 °C

Durée du traitement: 45 mn.

Les mêmes commentaires que précédemment peuvent être faits au sujet de la qualité des lentilles obtenues (taux d'hydratation: 40%).

Exemple 4

Dans cet exemple, la composition de base est identique à celle de l'exemple 1.

Cinq moules sont superposés dans le guide tubulaire 28 de façon symétrique par rapport au centre de l'enceinte. Ces moules sont en polyméthylpentène.

Poids de la dose dans chaque moule: 0,02 g

Poids propre de chaque moule: 1,18 g

$$\frac{\text{puissance absorbée}}{\text{puissance émise}} : 50\%$$

Densité de puissance moyenne: 0,049 watt/cm$^3$

Durée du traitement: 5 mn.

A l'issue de ce traitement dont la durée est très faible en comparaison avec les autres exemples, les lentilles obtenues sont polymérisées de façon uniforme, sans défaut géométrique ou optique.

Exemple 5

Dans cet exemple, la composition de base, le poids des doses et le poids et la nature des moules sont identiques à ceux de l'exemple précédent.

Les moules sont amenés à défiler en continu dans le guide tubulaire 30 avec une vitesse de l'ordre de 1 cm/mn (vitesse de défilement du tapis 33). Chaque moule reste environ 30 mn dans l'enceinte, le nombre de moules présents à chaque instant dans l'enceinte étant d'environ 14.

Le rendement $\dfrac{\text{puissance absorbée}}{\text{puissance émise}}$ et la

Densité moyenne sont du même ordre que ceux de l'exemple précédent.

Les mêmes commentaires peuvent être faits au sujet de la qualité des lentilles obtenues.

**Revendications**

1. Procédé de fabrication d'une lentille de contact de qualité optique appropriée, du type consistant:

– à réaliser des moules étanches fermés, reproduisant en creux la forme des lentilles à obtenir et constitués en un matériau transparent ou peu absorbant à l'égard des ondes électromagnétiques hyperfréquences, lesdits moules étant réalisés de façon à posséder une inertie thermique très supérieure à celle de la dose de composition de base nécessaire pour réaliser une lentille,

– à élaborer une composition de base à partir d'un ou de monomères à doubles liaisons polymérisables, ayant un caractère absorbant à l'égard des ondes hyperfréquences,

– et à assurer la polymérisation de la composition à l'intérieur des moules fermés, par irradiation au moyen d'ondes hyperfréquences,

l'opération de polymérisation étant réalisée en disposant une pluralité de moules (1) contenant chacun une dose de composition de base, à l'intérieur d'au moins une enceinte fermée (9), ledit procédé étant caractérisé en ce que l'enceinte métallique est à symétrie de révolution, constituant une cavité résonnante à mode unique pour la fréquence des ondes hyperfréquences utilisées, lesdits moules étant superposés en colonnes et répartis de sorte que les doses de composition de base contenues dans ceux-ci fassent office de charge adaptée à l'intérieur de ladite cavité résonnante, lesdits moules étant positionnés, d'une part, selon quatre colonnes, dites centrales, disposées au voisinage immédiat d'une antenne rayonnante (10) s'étendant le long de l'axe de l'enceinte, d'autre part, selon quatre autres colonnes, dites périphériques, disposées à la périphérie immédiate des colonnes centrales, chaque colonne périphérique étant disposée dans l'espace séparant le pourtour extérieur de deux colonnes centrales voisines.

2. Procédé selon la revendication 1, caractérisé en ce que les moules (1) sont disposés, d'une part, selon des colonnes centrales disposées au voisinage immédiat de l'antenne (10) et s'étendant à peu près sur la hauteur de l'enceinte (9), d'autre part, selon des colonnes périphériques, disposées à la périphérie immédiate des colonnes centrales et s'étendant sur une fraction de la hauteur de l'enceinte.

3. Procédé de fabrication d'une lentille de contact de qualité optique appropriée, du type consistant:

— à réaliser des moules étanches fermés, reproduisant en creux la forme des lentilles à obtenir et constitués en un matériau transparent ou peu absorbant à l'égard des ondes électromagnétiques hyperfréquences, lesdits moules étant réalisés de façon à posséder une inertie thermique très supérieure à celle de la dose de composition de base nécessaire pour réaliser une lentille,

— à élaborer une composition de base à partir d'un ou de monomères à doubles liaisons polymérisables, ayant un caractère absorbant à l'égard des ondes hyperfréquences,

— et à assurer la polymérisation de la composition à l'intérieur des moules fermés, par irradiation au moyen d'ondes hyperfréquences,

l'opération de polymérisation étant réalisée en disposant une pluralité de moules (1) contenant chacun une dose de composition de base à l'intérieur d'au moins une enceinte fermée (9), ledit procédé étant caractérisé en ce que l'enceinte métallique est à symétrie de révolution constituant une cavité résonnante à mode unique pour la fréquence des ondes hyperfréquences utilisées, lesdits moules étant superposés en colonne et répartis de sorte que les doses de composition de base contenues dans ceux-ci fassent office de charge adaptée à l'intérieur de ladite cavité résonnante, lesdits moules étant positionnés selon une colonne disposée le long de l'axe de l'enceinte, la cavité résonnante étant excitée par un iris (25) symétrique par rapport au plan transversal médian de l'enceinte.

4. Procédé selon la revendication 3, caractérisé en ce que les moules sont disposés dans un guide tubulaire central (28, 30) traversant l'enceinte le long de son axe.

5. Procédé selon la revendication 4, caractérisé en ce que les moules sont amenés à défiler dans le guide central (30) avec une vitesse appropriée pour que chaque moule demeure dans le volume central utile de l'enceinte le temps nécessaire au traitement.

6. Procédé selon l'une des revendications 1, 2, 3, 4 ou 5, dans lequel les moules (1) sont disposés dans une enceinte (9) excitée selon le mode de résonance TM 010.

7. Procédé selon l'une des revendications 1, 2, 3, 4, 5 ou 6, caractérisé en ce que l'on interpose dans une ou des colonnes de moules (1) des charges diélectriques auxiliaires en un matériau absorbant à l'égard des ondes hyperfréquences, de façon à accroître l'homogénéité du champ électromagnétique au niveau des moules.

8. Procédé selon l'une des revendications précédentes, caractérisé en ce que l'on assure un refroidissement par ventilation de la portion supérieure de l'enceinte, pour homogénéiser la température à l'intérieur de celle-ci et assurer, au niveau des moules, une température inférieure à approximativement 40 °C.

9. Procédé selon l'une des revendications précédentes, caractérisé en ce que l'enceinte (9) est alimentée en ondes hyperfréquences de sorte que la densité de puissance moyenne à l'intérieur de celle-ci soit approximativement comprise entre $10^{-2}$ et $50.10^{-2}$ watt/cm$^3$.

10. Procédé selon l'une des revendications précédentes, dans lequel la composition de base est un monomère ou un mélange de monomères, ayant une molécule de volume élevé, du groupe suivant: hydroxy éthyl méthacrylate, hydroxy propyl méthacrylate, hydroxy éthyl acrylate, éthylène glycol diméthacrylate, N Vinyl pyrrolidone, méthyl méthacrylate, acide méthacrylique caractérisé en ce que l'on mélange à ladite composition de base un initiateur constitué en particulier par de l'azobis iso butyro nitrile, ou un hydropéroxyde ou un péroxyde, en proportion pondérale approximativement comprise entre 0,04% et 0,15%.

11. Dispositif pour la mise en oeuvre du procédé conforme à la revendication 1, en vue de la fabrication de lentilles de contact, comprenant des moyens de générations d'ondes hyperfréquences de fréquence prédéterminée (2), une enceinte fermée et un guide d'ondes, caractérisé en ce que l'enceinte (9) est cylindrique, métallique, et adaptée pour former une cavité résonnante à mode unique pour la fréquence desdites ondes, avec une antenne métallique axiale (10), disposée selon l'axe de l'enceinte (9) et traversant un des fonds circulaires de celle-ci pour pénétrer dans le guide d'ondes (4), lequel est doté d'une barre transversale de couplage (11) à laquelle est assujettie ladite antenne, et avec des moyens de positionnement (13, 14, 15) d'une pluralité de moules dans ladite cavité, adaptés pour permettre de mettre en place lesdits moules dans une zone de champ électromagnétique sensiblement homogène de ladite cavité.

12. Dispositif pour la mise en oeuvre du procédé conforme à la revendication 3, en vue de la fabrication de lentilles de contact, comprenant des moyens de générations d'ondes hyperfréquences de fréquence prédéterminée (2), une enceinte fermée, caractérisé en ce que l'enceinte (9) est cylindrique, métallique, et adaptée pour former une cavité résonnante à mode unique pour la fréquence desdites ondes, avec un iris (25) symétrique par rapport au plan transversal médian de l'enceinte et constitué par une fente ménagée dans la paroi cylindrique de celle-ci, et avec des moyens de positionnement (13, 14, 15) d'une pluralité de moules dans ladite cavité, adaptés pour permettre de mettre en place lesdits moules dans une zone de champ électromagnétique sensiblement homogène de ladite cavité.

13. Dispositif selon l'une des revendications 11 et 12, caractérisé en ce qu'il comprend une enceinte cylindrique (9) de diamètre interne D tel que:

$$D = \frac{2,29 \cdot 10^4}{f} \mp 1\%$$

dans le cas du mode TM 010,

$$ou \quad D = \frac{3,65 \cdot 10^4}{f} \mp 1\%$$

dans le cas du mode TM 110,

où D est exprimé en millimètres et où f est la fréquence des ondes exprimées en mégahertz.

14. Dispositif selon l'une des revendication 11, 12 ou 13, caractérisé en ce que les moyens de positionnement des moules comprennent un ou des guides en matériau diélectrique (13, 14, 28, 30) transparent ou peu absorbant à l'égard des ondes hyperfréquences, ce ou ces guides s'étendant chacun parallèlement à l'axe de l'enceinte (9) et étant adaptés pour contenir les moules et maintenir ceux-ci en positions superposées.

15. Dispositif selon la revendication 14, caractérisé en ce qu'il comprend huit guides amovibles (13, 14), aptes à contenir chacun une colonne de moules superposés, l'enceinte (9) étant dotée de moyens (15) de maintien des guides permettant de les disposer dans des positions prédéterminées à l'intérieur de ladite enceinte.

16. Dispositif selon la revendication 14, caractérisé en ce qu'il comprend un guide tubulaire central, s'étendant le long de l'axe de l'enceinte et traversant celle-ci de part en part.

17. Dispositif selon l'une des revendications 11, 12, 13, 14, 15 ou 16, caractérisé en ce qu'il est équipé de moyens (21) de ventilation de la partie supérieure de l'enceinte aptes à assurer un écoulement d'air extérieur autour de celle-ci.

18. Dispositif selon l'une des revendications 11, 12, 13, 14, 15 ou 16, caractérisé en ce qu'il est équipé de moyens de ventilation de la partie supérieure de l'enceinte, comprenant des moyens (22, 23) de soufflage d'air à l'intérieur de ladite partie supérieure et une bouche de sortie d'air (24).

19. Dispositif selon l'une des revendications 11, 12, 13, 14, 15, 16, 17 ou 18, dans lequel les moyens de génération d'ondes comprennent un magnétron (2) associé à un ensemble d'alimentation électrique (3), un guide d'ondes (4) reliant ledit magnétron aux moyens de rayonnement (10) couplés à l'enceinte (9) et un adaptateur réglable E/H (8) interposé sur ce guide d'ondes (4) et adapté pour permettre de minimiser les ondes réfléchies dans le guide d'ondes en fonction de la charge de l'enceinte.

**Claims**

1. Method of manufacturing a contact lens of suitable optical quality, which consists in
   – producing closed tight moulds which reproduce in hollow form the shape of the lenses to be obtained and are composed of a material that is transparent or has low absorptive power for ultra-high frequency electromagnetic waves, said moulds being made such as to have a much greater temperature lag than that of the amount of base composition required for producing a lens;
   – developing a base composition from one or more monomers, having polymerisable double bonds and having absorptive power for ultra-high frequency waves, and
   – effecting the polymerisation of the composition inside the closed moulds by irradiation by means of ultra-high frequency waves, the polymerisation operation being carried out by placing a plurality of moulds (1), each containing a given amount of base composition, inside at least one closed chamber (9),

said process being characterised in that the metal chamber is rotationally symmetrical, constituting a resonance cavity with one single mode for the frequency of the ultra-high frequency waves used, said moulds being superimposed in columns and distributed so that the amounts of base composition, contained in the latter, serve as fillings adapted to the interior of said resonance cavity, said moulds being positioned, on the one hand, in four, so-called centre, columns, located directly adjacent to a radiating aerial (10) which extends along the axis of the chamber, and, on the other hand, in four other, so-called peripheral, columns, located on the immediate periphery of the centre columns, each peripheral column being placed in the space between the outer circumference of two neighbouring centre columns.

2. Method according to Claim 1, characterised in that the moulds (1) are arranged, on the one hand, in centre columns, located directly adjacent to the aerial (10) and extending approximately over the height of the chamber (9), and, on the other hand, in peripheral columns, located on the immediate periphery of the centre columns and extending over a fraction of the height of the chamber.

3. Method of manufacturing a contact lens of suitable optical quality, which consists in
   – producing closed tight moulds which reproduce in hollow form the shape of the lenses to be obtained and are composed of a material that is transparent or has low absorptive power for ultra-high frequency electromagnetic waves, said moulds being made such as to have a much greater temperature lag than that of the amount of base composition required for producing a lens;
   – developing a base composition from one or more monomers, having polymerisable double bonds and having absorptive power for ultra-high frequency waves, and
   – effecting the polymerisation of the composition inside the closed moulds by irradiation by means of ultra-high frequency waves, the polymerisation operation being carried out by placing a plurality of moulds (1), each containing a given amount of base composition, inside at least one closed chamber (9),

said process being characterised in that the metal chamber is rotationally symmetrical, constituting a resonance cavity with one single mode for the frequency of the ultra-high frequency waves used, said moulds being super-imposed in columns and distributed so that the amounts of base composition, contained in the latter, serve as fillings adapted to the interior of said resonance cavity, said moulds being positioned in a column placed along the axis of the chamber, the resonance cavity being excited by an iris (25) which is symmetrical relative to the median transverse plane of the chamber.

4. Method according to Claim 3, characterised in that the moulds are placed in a central tubular guide (28, 30), going through the chamber along its axis.

5. Method according to Claim 4, characterised in that the moulds are made to pass along in the central guide (30) at a speed appropriate for ensuring that each mould stays in the useful central volume of the chamber for the time required for the treatment.

6. Method according to one of the Claims 1, 2, 3, 4 or 5, in which the moulds (1) are placed in a chamber (9) which is excited in the resonance mode TM 010.

7. Method according to one of the Claims 1, 2, 3, 4, 5 or 6, characterised in that auxiliary dielectric fillers, made of a material that has absorptive power for ultra-high frequency waves, are inserted in one or more mould columns (1), so as to increase the uniformity of the electromagnetic field at the level of the moulds.

8. Method according to one of the preceding claims, characterised in that cooling is brought about by ventilation of the upper part of the chamber, so as to even out the temperature inside the latter and produce a temperature below about 40 °C at the level of the moulds.

9. Method according to one of the preceding claims, characterised in that the chamber (9) is supplied with ultra-high frequency waves, so that the mean power density inside the latter lies approximately between $10^{-2}$ and $50.10^{-2}$ watt/cm$^3$.

10. Method according to one of the preceding claims, in which the base composition is a monomer or a mixture of monomers, having a high molecular volume, from the following group: hydroxyethyl methacrylate, hydroxypropyl methacrylate, hydroxyethyl acrylate, ethylene glycol dimethacrylate, N-vinyl pyrrolidone, methyl methacrylate and methacrylic acid, characterised in that an initiator, consisting, in particular, of azo-bisisobutyronitrile or a hydroperoxide or a peroxide, is admixed to said base composition in a proportion by weight ranging from about 0.04% to 0.15%.

11. Apparatus for performing the method in accordance with Claim 1, with a view to manufacturing contact lenses, comprising means for generating ultra-high frequency waves of predetermined frequency (2), a closed chamber and a wave guide, characterised in that the chamber (9) is cylindrical, metallic and suitable for forming a resonance cavity with single mode for the frequency of said waves, containing an axial metal aerial (10), placed along the axis of the chamber (9) and going through one of the circular bases of the latter, so as to penetrate into the wave guide (4), which is provided with a transverse coupling bar (11) to which said aerial is fastened, and also containing means for positioning (13, 14, 15) a plurality of moulds in said cavity, capable of enabling said moulds to be placed in an approximately uniform electromagnetic field zone of said cavity.

12. Apparatus for performing the method in accordance with Claim 3, with a view to manufacturing contact lenses, comprising means for generating ultra-high frequency waves of predetermined frequency (2) and a closed chamber, characterised in that the chamber (9) is cylindrical, metallic and suitable for forming a resonance cavity with single mode for the frequency of said waves, containing an iris (25), which is symmetrical relative to the median transverse plane of the chamber and consists of a slit worked into the cylindrical wall of the latter, and also containing means for positioning (13, 14, 15) a plurality of moulds in said cavity, suitable for enabling said moulds to be placed in an approximately uniform electromagnetic field zone of said cavity.

13. Apparatus according to either Claim 11 or 12, characterised in that it comprises a cylindrical chamber (9) having an internal diameter D such that

$$D = \frac{2,29 \cdot 10^4}{f} \mp 1\% \quad \text{in case of mode TM 010}$$

$$\text{or} \quad D = \frac{3,65 \cdot 10^4}{f} \mp 1\% \quad \text{in case of mode TM 110,}$$

where D is expressed in millimetres and where f is the frequency of the waves, expressed in megahertz.

14. Apparatus according to one of the Claims 11, 12, or 13, characterised in that the means for positioning the moulds comprise one or more guides, made of a dielectric material (13, 14, 28, 30) that is transparent or has low absorptive power for ultra-high frequency waves, this guide or these guides each extending parallel to the axis of the chamber (9) and being suitable for containing the moulds and keeping them in superimposed position.

15. Apparatus according to Claim 14, characterised in that it comprises eight detachable guides (13, 14), each capable of containing a column of superimposed moulds, the chamber (9) being provided with means (15) for maintaining the guides, enabling them to be placed into predetermined positions inside said chamber.

16. Apparatus according to Claim 14, characterised in that it comprises a central tubular guide, extending along the axis of the chamber and passing through the latter from one side to the other.

17. Apparatus according to one of the Claims 11, 12, 13, 14, 15 or 16, characterised in that it is provided with means (21) for ventilating the upper part of the chamber, capable of producing flow of external air around the latter.

18. Apparatus according to one of the Claims 11, 12, 13, 14, 15 or 16, characterised in that it is provided with means for ventilating the upper part of the chamber, comprising means (22, 23) for blowing air into the interior of said upper part and an exit orifice for air (24).

19. Apparatus according to one of the Claims 11, 12, 13, 14, 15, 16, 17 or 18, in which the wave-generating means comprise a magnetron (2), associated with an electricity supply system (3), a wave guide (4), connecting said magnetron with the radiating means (10), coupled with the chamber (9), and an adjustable E/H converter (8), inserted in this wave guide (4) and suitable for enabling the waves reflected in the wave guide to be reduced to a minimum, depending on the filling of the chamber.

**Patentansprüche**

1. Verfahren zum Herstellen einer Kontaktlinse entsprechender optischer Beschaffenheit, welches darin besteht, dass man
— geschlossene, dichte Formen fertigt, welche die Form der zu erhaltenden Linsen in Hohlform wiedergeben und aus einem durchsichtigen oder elektromagnetische Ultrahochfrequenzwellen schwach absorbierenden Stoff bestehen, wobei besagte Formen derart gefertigt sind, dass sie eine thermische Verzögerung aufweisen, welche weit über der der zum Herstellen einer Linse erforderlichen Menge Grundmasse liegt,
— eine Grundmasse aus einem oder mehreren polymerisierbare Doppelbindungen enthaltenden und Ultrahochfrequenzwellen absorbierenden Monomeren ausarbeitet und
— die Polymerisierung der Masse innerhalb der geschlossenen Formen durch Bestrahlen mittels Ultrahochfrequenzwellen vornimmt, wobei der Polymerisierungs-Arbeitsgang in der Weise durchgeführt wird, dass man eine Mehrzahl von jeweils eine bestimmte Menge Grundmasse enthaltenden Formen (1) innerhalb mindestens einer geschlossenen Kammer (9) anordnet,
wobei besagtes Verfahren dadurch gekennzeichnet ist, dass die Metallkammer rotationssymmetrisch ist und einen Resonanz-Hohlraum mit einer einzigen Schwingungsart für die Frequenz der verwendeten Ultrahochfrequenzwellen darstellt, wobei besagte Formen in Säulen übereinandergelegt und so verteilt sind, dass die in diesen enthaltenen Grundmassen-Mengen als an das Innere des besagten Resonanz-Hohlraums angepasste Füllung dienen, wobei besagte Formen einerseits in vier Säulen, den sog. Mittel-Säulen, aufgestellt sind, welche einer ausstrahlenden, sich der Kammer-Achse entlang erstreckenden Antenne (10) unmittelbar benachbart angeordnet sind, und andererseits in vier weiteren Säulen, den sog. Peripherie-Säulen, aufgestellt sind, welche am unmittelbaren Umfang der Mittel-Säulen angeordnet sind, wobei die Peripherie-Säulen jeweils im Zwischenraum zwischen dem äusseren Umfang zweier benachbarter Mittel-Säulen angeordnet sind.

2. Verfahren nach Anspruch 1, dadurch gekennzeichnet, dass die Formen (1) einerseits in der Antenne (10) unmittelbar benachbart angeordneten und sich ungefähr über die Höhe der Kammer (9) erstreckenden Mittel-Säulen und andererseits in auf der unmittelbaren Peripherie der Mittel-Säulen angeordneten und sich über einen Bruchteil der Kammer-Höhe erstreckenden Peripherie-Säulen angeordnet sind.

3. Verfahren zum Herstellen einer Kontaktlinse entsprechender optischer Beschaffenheit, welches darin besteht, dass man
— geschlossene, dichte Formen fertigt, welche die Form der zu erhaltenden Linsen in Hohlform wiedergeben und aus einem durchsichtigen oder elektromagnetische Ultrahochfrequenzwellen schwach absorbierenden Stoff bestehen, wobei besagte Formen derart gefertigt sind, dass sie eine thermische Verzögerung aufweisen, welche weit über der der zum Herstellen einer Linse erforderlichen Menge Grundmasse liegt,
— eine Grundmasse aus einem oder mehreren polymerisierbare Doppelbindungen enthaltenden und Ultrahochfrequenzwellen absorbierenden Monomeren ausarbeitet und
— die Polymerisierung der Masse innerhalb der geschlossenen Formen durch Bestrahlen mittels Ultrahochfrequenzwellen vornimmt,
wobei der Polymerisierungs-Arbeitsgang in der Weise durchgeführt wird, dass man eine Mehrzahl von jeweils eine bestimmte Menge Grundmasse enthaltenden Formen (1) innerhalb mindestens einer geschlossenen Kammer (9) anordnet,
wobei besagtes Verfahren dadurch gekennzeichnet ist, dass die Metallkammer rotationssymmetrisch ist und einen Resonanz-Hohlraum mit einer einzigen Schwingungsart für die Frequenz der verwendeten Ultrahochfrequenzwellen darstellt, wobei besagte Formen in Säulen übereinandergelegt und so verteilt sind, dass die in diesen enthaltenen Grundmassen-Mengen als an das Innere des besagten Resonanz-Hohlraums angepasste Füllung dienen, wobei besagte Formen in einer der Kammer-Achse entlang angeordneten Säule plaziert sind, wobei der Resonanz-Hohlraum durch eine der mittleren Querebene der Kammer gegenüber symmetrischen Irisblende (25) erregt wird.

4. Verfahren nach Anspruch 3, dadurch gekennzeichnet, dass die Formen in einer röhrenförmigen, die Kammer ihrer Achse entlang durchziehenden Mittel-Führung (28, 30) angeordnet sind.

5. Verfahren nach Anspruch 4, dadurch gekennzeichnet, dass die Formen in der Mittel-Führung (30) mit einer entsprechenden Geschwindigkeit durchgehen gelassen werden, sodass die Formen jeweils im nutzbaren Mittelraum der Kammer die für die Behandlung erforderliche Zeit lang bleiben.

6. Verfahren nach einem der Ansprüche 1, 2, 3, 4 oder 5, bei welchem die Formen (1) in einer in der Resonanz-Schwingungsart TM 010 erregten Kammer (9) angeordnet sind.

7. Verfahren nach einem der Ansprüche 1, 2, 3, 4, 5 oder 6, dadurch gekennzeichnet, dass man in eine oder mehrere Formen-Säulen (1) dielektrische Hilfsfüllungen aus einem Ultrahochfrequenzwellen absorbierenden Stoff einsetzt, um so die Einheitlichkeit des elektromagnetischen Felds auf der Höhe der Formen zu verstärken.

8. Verfahren nach einem der vorangehenden Ansprüche, dadurch gekennzeichnet, dass man eine Kühlung durch Ventilation des Oberteils der Kammer vornimmt, um die Temperatur im Innern dieser zu vereinheitlichen und auf der Höhe der Formen eine Temperatur unter etwa 40 °C zustande zu bringen.

9. Verfahren nach einem der vorangehenden Ansprüche, dadurch gekennzeichnet, dass die Kammer (9) mit Ultrahochfrequenzwellen derart gespeist wird, dass die mittlere Energiedichte in deren Innern etwa zwischen $10^{-2}$ und $50.10^{-2}$ Watt/cm³ liegt.

10. Verfahren nach einem der vorangehenden Ansprüche, bei welchem es sich bei der Grundmasse um ein Monomer oder ein Gemisch von Monomeren mit hohem Molekularvolumen aus der folgenden Gruppe handelt: Hydroxyäthylmethacrylat, Hydroxypropylmethacrylat, Hydroxyäthylacrylat, Äthylenglykoldimethacrylat, N-Vinylpyrrolidon, Methylmethacrylat und Methacrylsäure, dadurch gekennzeichnet, dass man besagter Grundmasse einen Initiator, welcher insbesondere aus Azo-bis-isobutyronitril oder einem Hydroperoxyd oder einem Peroxyd besteht, mit einem Gewichtsanteil zwischen etwa 0,04% und 0,15% beimischt.

11. Vorrichtung zur Durchführung des Verfahrens gemäss Anspruch 1 zwecks Herstellung von Kontaktlinsen, umfassend Mittel zur Erzeugung von Ultrahochfrequenzwellen vorbestimmter Frequenz (2), eine geschlossene Kammer und eine Wellenführung, dadurch gekennzeichnet, dass die Kammer (9) zylinderförmig, metallisch und dazu geeignet ist, einen Resonanz-Hohlraum mit einer einzigen Schwingungsart für die Frequenz besagter Wellen zu bilden, mit einer axialen Metall-Antenne (10), welche der Achse der Kammer (9) entlang angeordnet ist und einen der runden Boden derselben durchzieht, um in die Wellenführung (4) einzudringen, welche mit einer Kupplungs-Querstange (11) versehen ist, an welcher besagte Antenne befestigt ist, und mit Plaziermitteln (13, 14, 15) für eine Mehrzahl von Formen in besagtem Hohlraum, welche dazu geeignet sind, das Plazieren besagter Formen in einer ungefähr gleichförmigen elektromagnetischen Feldzone des besagten Hohlraums zu ermöglichen.

12. Vorrichtung zur Durchführung des Verfahrens gemäss Anspruch 3 zwecks Herstellung von Kontaktlinsen, umfassen Mittel zur Erzeugung von Ultrahochfrequenzwellen vorbestimmter Frequenz (2) und eine geschlossene Kammer, dadurch gekennzeichnet, dass die Kammer (9) zylinderförmig, metallisch und dazu geeignet ist, einen Resonanz-Hohlraum mit einer einzigen Schwingungsart für die Frequenz besagter Wellen zu bilden, mit einer Irisblende (25), welche der Mittel-Querebene der Kammer gegenüber symmetrisch liegt und aus einem in die zylinderförmige Wand derselben eingearbeiteten Spalt besteht, und mit Plaziermitteln (13, 14, 15) für eine Mehrzahl von Formen in besagtem Hohlraum, welche dazu geeignet sind, das Plazieren besagter Formen in einer ungefähr gleichförmigen elektromagnetischen Feldzone des besagten Hohlraums zu ermöglichen.

13. Vorrichtung nach einem der Ansprüche 11 oder 12, dadurch gekennzeichnet, dass sie eine zylinderförmige Kammer (9) mit lichter Weite D umfasst, derart dass

$$D = \frac{2,29 \cdot 10^4}{f} \mp 1\%$$

für den Fall der Schwingungsart TM 010

$$\text{oder} \qquad D = \frac{3,65 \cdot 10^4}{f} \mp 1\%$$

für den Fall der Schwingungsart TM 110,

wobei D in Millimetern ausgedrückt und f die in Megahertz ausgedrückte Frequenz der Wellen ist.

14. Vorrichtung nach einem der Ansprüche 11, 12 oder 13, dadurch gekennzeichnet, dass die Plaziermittel für die Formen eine oder mehrere Führungen aus einem dielektrischen Stoff (13, 14, 28, 30) umfassen, welcher durchsichtig ist oder Ultrahochfrequenzwellen schwach absorbiert, wobei sich diese Führung oder Führungen jeweils parallel zur Achse der Kammer (9) erstrecken und geeignet sind, die Formen zu beinhalten und diese übereinandergelegt zu halten.

15. Vorrichtung nach Anspruch 14, dadurch gekennzeichnet, dass sie acht abnehmbare Führungen (13, 14) umfasst, welche jeweils befähigt sind, eine Säule von übereinanderliegenden Formen zu beinhalten, wobei die Kammer (9) mit Mitteln (15) zur Aufrechterhaltung der Führungen versehen ist, welche es ermöglichen, sie in vorbestimmten Lagen innerhalb besagter Kammer anzuordnen.

16. Vorrichtung nach Anspruch 14, dadurch gekennzeichnet, dass sie eine röhrenförmige Mittel-Führung umfasst, welche sich der Achse der Kammer entlang erstreckt und diese von einer Seite bis zur anderen durchzieht.

17. Vorrichtung nach einem der Ansprüche 11, 12, 13, 14, 15 oder 16, dadurch gekennzeichnet, dass sie mit Mitteln (21) zum Ventilieren des Oberteils der Kammer ausgerüstet ist, welche befähigt sind, einen äusseren Luftstrom um diese herum zu erzeugen.

18. Vorrichtung nach einem der Ansprüche 11, 12, 13, 14, 15 oder 16, dadurch gekennzeichnet, dass sie mit Mitteln zum Ventilieren des Oberteils der Kammer ausgerüstet ist, welche Mittel (22, 23) zum Einblasen von Luft in das Innere besagten Oberteils und eine Luft-Ausgangsöffnung (24) umfassen.

19. Vorrichtung nach einem der Ansprüche 11, 12, 13, 14, 15, 16, 17 oder 18, bei welcher die Mittel zur Wellenerzeugung ein einer elektrischen Speise-Einrichtung (3) zugeordnetes Magnetron (2), eine Wellenführung (4), welche besagtes Magnetron mit den an die Kammer (9) gekuppelten Strahlungsmitteln (10) verbindet, und einen stellbaren E/H-Wandler (8) umfassen, welcher in diese Wellenführung (4) zwischengeschaltet und befähigt ist, die Verminderung der in der Wellenführung reflektierten Wellen je nach der Füllung der Kammer auf ein Mindestmass zu ermöglichen.

Fig. 1

Fig. 2

Fig. 3

Fig. 4

Fig. 5

17

16

1

20

1

19

18

Fig. 6

21

9

Fig. 7

23

22

24

Fig. 8

Fig. 10

Fig. 9

Fig.12

31

30

33

32

Fig. 11

26

29

28

27

25

4